# EUROPEAN PATENT APPLICATION

(11) **EP 3 786 198 A1**
(43) Date of publication of application: **03.03.2021**
(21) Application number: 19793537.2
(22) Date of filing: 17.04.2019
(51) Int. Cl.: C08F 220/18

(54) **COMPOSITION HAVING EXCELLENT CURABILITY**

(30) Priority: 23.04.2018 JP 2018082607
(71) Applicant: Kuraray Co., Ltd., Kurashiki-shi, Okayama 710-0801 (JP)
(72) Inventor: NOGUCHI, Daiki, Tainai-shi, Niigata 959-2691 (JP); FUKUMOTO, Takashi, Tainai-shi, Niigata 959-2691 (JP); KUBO, Keiji, Tsukuba-shi, Ibaraki 305-0841 (JP)
(74) Representative: D Young & Co LLP
(86) International application number: PCT/JP2019/016442
(87) International publication number: WO 2019/208353

(57) **Abstract**

A composition comprising a compound (A) represented by formula (I): 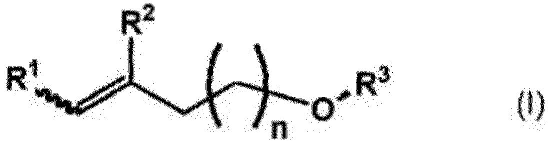 wherein R¹ and R² each independently represent any one selected from the group consisting of a hydrogen atom, an alkyl group having 1 to 6 carbon atoms, an alkenyl group having 2 to 6 carbon atoms, an aryl group, and an aralkyl group; R³ represents any one selected from the group consisting of a (meth)acryloyl group, a 4-vinylphenyl group, and an alkenyl group having 2 to 6 carbon atoms; and n represents an integer of 0 to 5,
and a polyfunctional compound (B) other than the compound (A) is excellent in the curability because the composition sufficiently polymerizes even in the presence of oxygen, for example, in an air atmosphere.

## Description

### Technical Field

The present invention relates to a composition having an excellent curability which comprises a specific unsaturated double bond-comprising compound and a cured product of the composition.

### Background Art

A radical polymerizable monomer such as a (meth)acrylic acid ester used in a coating material is polymerized for curing by generating radicals from a polymerization initiator by heating or irradiation with active energy ray. When such a radical polymerizable monomer is used for a coating material, the curing is usually carried out in an air atmosphere. Therefore, the curing in air causes problems that the polymerization reaction is easily inhibited by oxygen in air, the curing is delayed, and the surface of the cured product becomes sticky.

As a means for solving these problems, for example, a method of adding an amine compound or a wax has been proposed. The amine compound causes odor or discoloration, and thus is not suitable for coating applications that require transparency and aesthetic appearance. In addition, in the method of adding a wax, the added wax bleeds to the surface to cause stickiness. Further, although there is a method of curing a curable composition with its surface covered with a film, this method involves problems that many processes are required and it is difficult to apply to a large area and a complicated shape. As other methods for improving the curability, a method of adding a visible light absorbing dye (for example, Patent Literature 1) and a method of incorporating water and a water-soluble polymer (for example, Patent Literature 2) are also known. However, these method involve a problem that discoloration of the coating film after curing and deterioration of physical properties are likely to occur.

### Citation List

### Patent Literature

Patent Literature 1: JP 2003-337410 A
Patent Literature 2: JP 2007-8972 A

### Summary of Invention

### Technical Problem

Accordingly, an object of the present invention is to provide a composition having an excellent curability which sufficiently polymerizes for curing even in the presence of oxygen, for example, in an air atmosphere and a cured product of the composition.

### Solution to Problem

As a result of intensive studies to achieve the above object, the inventors have found that a composition having an excellent curability which sufficiently polymerizes for curing even in the presence of oxygen, for example, in an air atmosphere is obtained by adding a specific unsaturated double bond-comprising compound to a conventional coating material comprising a polyfunctional compound, such as a multi-(meth)acrylic acid ester, and a polymerization initiator. The present invention has been completed by further studying based on this finding.

That is, the present invention provides the following [1] to [14].
[1] A composition comprising a compound (A) represented by formula (I) and a polyfunctional compound (B) other than the compound (A): 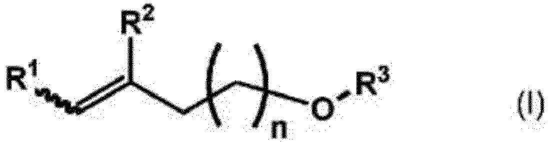 wherein:
   R¹ and R² each independently represent any one selected from the group consisting of a hydrogen atom, an alkyl group having 1 to 6 carbon atoms, an alkenyl group having 2 to 6 carbon atoms, an aryl group, and an aralkyl group;
   R³ represents any one selected from the group consisting of a (meth)acryloyl group, a 4-vinylphenyl group, and an alkenyl group having 2 to 6 carbon atoms;
   n represents an integer of 0 to 5; and
   a wavy line between R¹ and the double bond to which R¹ is attached indicates that R¹ is in a cis-position or a trans-position with respect to R².
[2] The composition according to [1], wherein R¹ and R² each independently represent any one selected from the group consisting of a hydrogen atom, an alkyl group having 1 to 6 carbon atoms, and an alkenyl group having 2 to 6 carbon atoms.
[3] The composition according to [1] or [2], wherein R¹ and R² each independently represent a hydrogen atom or an alkyl group having 1 to 6 carbon atoms.
[4] The composition according to any one of [1] to [3], wherein R¹ and R² each independently represent a hydrogen atom or an alkyl group having 1 to 4 carbon atoms.
[5] The composition according to any one of [1] to [4], wherein R¹ and R² each independently represent a hydrogen atom or a methyl group.
[6] The composition according to any one of [1] to [5], wherein R¹ is a hydrogen atom and R² is a hydrogen atom or a methyl group.
[7] The composition according to any one of [1] to [6], wherein R³ is a (meth)acryloyl group or a 4-vinylphenyl group.
[8] The composition according to any one of [1] to [7], wherein R³ is a (meth)acryloyl group.
[9] The composition according to any one of [1] to [8], wherein the compound (A) is represented by formula (II): 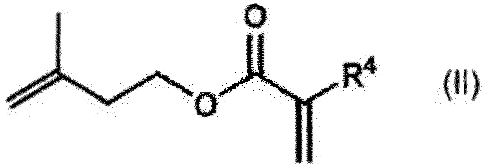 wherein R⁴ represents a hydrogen atom or a methyl group.
[10] The composition according to any one of [1] to [9], wherein the polyfunctional compound (B) is a multi-(meth)acrylate, an epoxy group-comprising (meth)acryloyl compound, or a hydroxy group-comprising multi-(meth)acrylate.
[11] The composition according to any one of [1] to [10], wherein the polyfunctional compound (B) is a multi-(meth)acrylate.
[12] The composition according to any one of claims [1] to [11], wherein the polyfunctional compound (B) is 1,6-hexamethylene di(meth)acrylate, 1,9-nonanediol di(meth)acrylate, or pentaerythritol tri(meth)acrylate.
[13] The composition according to any one of [1] to [12], wherein the composition comprises a polymerization initiator.
[14] A cured product obtained by curing the composition according to any one of [1] to [13].

### Advantageous Effects of Invention

According to the present invention, a composition having an excellent curability which sufficiently polymerizes for curing even in the presence of oxygen, for example, in an air atmosphere and a cured product obtained by curing the composition are provided.

### Description of Embodiments

The composition of the present invention comprises a compound (A) represented by formula (I) (also simply referred to as "compound (A)") and a polyfunctional compound (B) other than the compound (A). By adding the compound (A) and the polyfunctional compound (B), a composition having an excellent curability which sufficiently polymerizes for curing even in the presence of oxygen, for example, in an air atmosphere is obtained.

Although not limit the present invention, the advantageous effects mentioned above are largely attributable to the effective absorbance of oxygen by the carbon-carbon double bond of the compound (A) to which R¹ and R² are attached during the polymerization of the polyfunctional compound (B) and a large contribution of the carbon-carbon double bond to the crosslinking reaction (polymerization for curing).

### Compound (A)

The compound (A) used in the present invention is represented by formula (I).

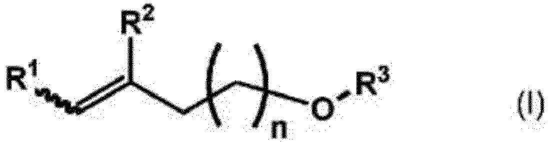

In formula (I):
R¹ and R² each independently represent any one selected from the group consisting of a hydrogen atom, an alkyl group having 1 to 6 carbon atoms, an alkenyl group having 2 to 6 carbon atoms, an aryl group, and an aralkyl group;
R³ represents any one selected from the group consisting of a (meth)acryloyl group, a 4-vinylphenyl group, and an alkenyl group having 2 to 6 carbon atoms; and
n represents an integer of 0 to 5.

Examples of the alkyl group having 1 to 6 carbon atoms represented by R¹ and R² include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a cyclopropyl group, a cyclobutyl group, a cyclopentyl group, and a cyclohexyl group.

Examples of the alkenyl group having 2 to 6 carbon atoms represented by R¹ and R² include a vinyl group, an allyl group, a propenyl group, an isopropenyl group, a butenyl group, an isobutenyl group, a pentenyl group, a hexenyl group, such as a cis-3-hexenyl group, and a cyclohexenyl group.

Examples of the aryl group represented by R¹ and R² include a phenyl group, a tolyl group, a xylyl group, and a naphthyl group.

Examples of the aralkyl group represented by R¹ and R² include a benzyl group, a 2-phenylethyl group, a 2-naphthylethyl group, and a diphenylmethyl group.

In formula (I), the wavy line between R¹ and the double bond to which R¹ is attached means that the compound (A) is not limited to a specific isomer of the geometric isomers based on the double bond. That is, when R¹ is other than a hydrogen atom, R¹ is in the cis-position or the trans-position with respect to R².

R¹ and R² are each preferably any one selected from the group consisting of a hydrogen atom, an alkyl group having 1 to 6 carbon atoms, and an alkenyl group having 2 to 6 carbon atoms, more preferably a hydrogen atom or an alkyl group having 1 to 6 carbon atoms, still more preferably a hydrogen atom or an alkyl group having 1 to 4 carbon atoms, and particularly preferably a hydrogen atom or a methyl group. Among these, R¹ is preferably a hydrogen atom and R² is preferably a hydrogen atom or a methyl group.

In formula (I), R³ represents any one selected from the group consisting of a (meth)acryloyl group, a 4-vinylphenyl group, and an alkenyl group having 2 to 6 carbon atoms. In the description herein, "(meth)acryloyl" means either an acryloyl group or a methacryloyl group.

Examples of the alkenyl group having 2 to 6 carbon atoms represented by R³ include a vinyl group, an allyl group, a propenyl group, an isopropenyl group, a butenyl group, an isobutenyl group, a pentenyl group, a hexenyl group (such as a cis-3-hexenyl group), and a cyclohexenyl group.

From the viewpoint of effectively acting as a polymerizable group and more remarkably exhibiting the effect of the present invention, R³ is preferably a (meth)acryloyl group or a 4-vinylphenyl group, and more preferably a (meth)acryloyl group.

In formula (I), n represents an integer of 0 to 5, preferably an integer of 1 to 4, more preferably 1 or 2, and still more preferably 1.

Examples of the compound (A) are shown below.

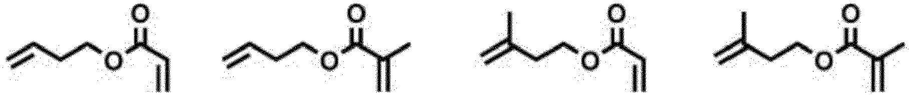

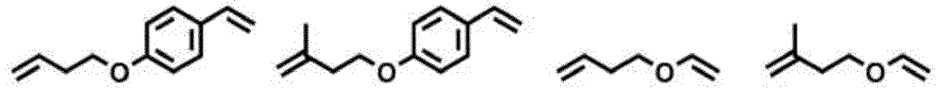

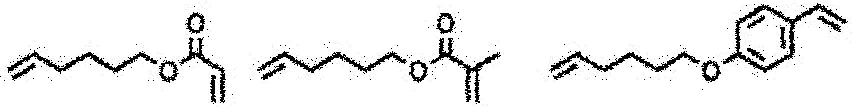

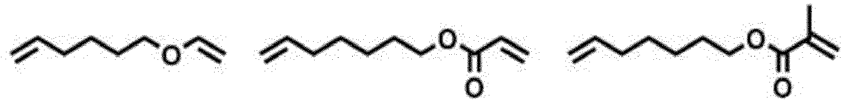

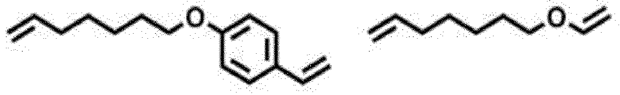

The compound (A) is preferably represented by formula (II) because of easy availability of a raw material.

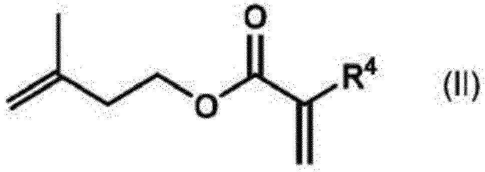

In formula (II), R⁴ represents a hydrogen atom or a methyl group.

The method for producing the compound (A) is not particularly limited, and the compound (A) is produced by using known methods alone or in combination. For example, the compound (A) represented by formula (A-1) below is produced by the reaction of methyl methacrylate with a corresponding alcohol, i.e., 3-methyl-3-butene-1-ol, in the presence of a transesterification catalyst, such as a base.

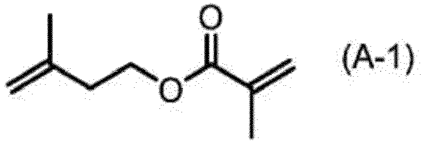

In the composition of the present invention, the compound (A) may be included alone or in combination of two or more.

The content of the compound (A) in the composition is not particularly limited. From the viewpoint of curability of the composition to be obtained, the content is preferably 0.1% by mass or more, more preferably 0.2% by mass or more, and still more preferably 0.5% by mass or more. From the viewpoint of physical properties of the cured product to be obtained, the content is preferably 50% by mass or less, more preferably 10% by mass or less, and still more preferably 5% by mass or less.

### Polyfunctional compound (B)

The composition comprises a polyfunctional compound (B) other than the compound (A) in addition to the compound (A). As the polyfunctional compound (B), a compound having two or more polymerizable groups in the molecule is preferably used. Examples of the polymerizable group include a radical polymerizable group, such as a (meth)acryloyl group and a vinyl group, and a cation polymerizable group, such as an epoxy group. The polyfunctional compound (B) preferably has two or more radical polymerizable groups in the molecule. Examples of the polyfunctional compound (B) include a multi-(meth)acrylate having two or more (meth)acryloyloxy groups in the molecule and an epoxy group-comprising (meth)acryloyl compound. The multi-(meth)acrylate may be a hydroxy group-comprising multi-(meth)acrylate. The composition may include the polyfunctional compound (B) alone or in combination of two or more.

As the multi-(meth)acrylate, a (meth)acrylate of a polyhydric alcohol, such as diol or triol, is usable, and examples thereof include ethylene glycol di(meth)acrylate, diethylene glycol di(meth)acrylate, dipropylene glycol di(meth)acrylate, tripropylene glycol di(meth)acrylate, 1,3-butanediol di(meth)acrylate, 1,4-butanediol di(meth)acrylate, 1,6-hexamethylene di(meth)acrylate, neopentyl glycol di(meth)acrylate, 1,9-nonanediol di(meth)acrylate, 1,10-decanediol di(meth)acrylate, tricyclodecanedimethanol di(meth)acrylate, glycerin di(meth)acrylate, di(meth)acrylate of a hydrogenated bisphenol A or a hydrogenated bisphenol F, polyethylene glycol di(meth)acrylate, polypropylene glycol di(meth)acrylate, pentaerythritol tetra(meth)acrylate, dipentaerythritol hexa(meth)acrylate, and trimethylolpropane tri(meth)acrylate.

Examples of the hydroxy group-comprising multi-(meth)acrylate include glycerol di(meth)acrylate, trimethylolpropane di(meth)acrylate, pentaerythritol tri(meth)acrylate, pentaerythritol di(meth)acrylate, and dipentaerythritol monohydroxypenta(meth)acrylate.

Examples of the epoxy group-comprising (meth)acryloyl compound include a (meth)acrylic acid esters having a terminal epoxy group, such as glycidyl (meth)acrylate.

Among these polyfunctional compounds (B), from the viewpoint of the water resistance of the cured product to be obtained, a multi-(meth)acrylate is preferable, and 1,6-hexamethylene di(meth)acrylate, 1,9-nonanediol di(meth)acrylate, and pentaerythritol tri(meth)acrylate are more preferable.

From the viewpoint of curability of the composition to be obtained, the content of the polyfunctional compound (B) in the composition is preferably 30% by mass or more, more preferably 50% by mass or more, and still more preferably 70% by mass or more,. The upper limit of the content is not particularly limited and may be appropriately set depending on the intended use of the composition. For example, the content may be 99% by mass or less.

### Polymerization initiator

The resin composition preferably further comprises a polymerization initiator from the viewpoint of further improving the curability. The type of the polymerization initiator is not particularly limited, and may be appropriately selected depending on the type of the polyfunctional compound (B) to be used. Specifically, a radical polymerization initiator, a cation polymerization initiator, an anion polymerization initiator may be used, and a radical polymerization initiator is preferable from the viewpoint of more remarkably exhibiting the effect of the present invention. Examples of the radical polymerization initiator include a thermal radical polymerization initiator that generates radicals by heat and a photoradical polymerization initiator that generates radicals by light.

Examples of the polymerization initiator include an organic peroxide that include a diacyl peroxide, such as benzoyl peroxide; a peroxyester, such as t-butyl peroxybenzoate; a hydroperoxide, such as cumene hydroperoxide; a dialkyl peroxide, such as dicumyl peroxide; a ketone peroxide, such as methyl ethyl ketone peroxide and acetylacetone peroxide; a peroxyketal; an alkyl peroxyesters; and a peroxycarbonate.

In addition, a commercially available radical polymerization initiator can be used. Examples thereof include Irgacure (registered trademark, the same applies hereinafter) 651, Irgacure 184, Irgacure 2959, Irgacure 127, Irgacure 907, Irgacure 369, Irgacure 379, Irgacure 819, Irgacure 784, Irgacure OXE01, Irgacure OXE02, and Irgacure 754 (all manufactured by BASF). These may be used alone or in combination of two or more.

The content of the polymerization initiator in the composition is not particularly limited. From the viewpoint of more remarkably exhibiting the effect of the present invention, the content is preferably 0.001% by mass or more, more preferably 0.01% by mass or more, still more preferably 0.1% by mass or more, and particularly preferably 1% by mass or more, and is preferably 10% by mass or less, and more preferably 5% by mass or less.

### Other resin

The composition may contain a resin other than the components described above. Examples of the other resin include an unsaturated polyester resin, a vinyl ester resin, a urethane (meth)acrylate resin, a fluororesin, a polyamide resin (polyamide 66), a polycarbonate resin, and a polyurethane resin.

Examples of the unsaturated polyester resin include a copolymer of a polyhydric alcohol with an α,β-unsaturated polybasic acid and/or another polybasic acid, such as a propylene glycol-phthalic anhydride-maleic anhydride copolymer and an ethylene glycol-phthalic anhydride-maleic anhydride copolymer, and a mixture of the above copolymer with a radical polymerizable monomer, such as styrene. The copolymer may further contain a glycidyl compound of an unsaturated alcohol, such as allyl glycidyl ether, as one of copolymerization components.

Examples of the vinyl ester resin include a resin obtained by adding (meth)acrylic acid to an epoxy resin, such as a resin obtained by adding (meth)acrylic acid to the terminal of a bisphenol A type epoxy resin.

Examples of the urethane (meth)acrylate resin include a resin obtained by adding (meth)acrylic acid or a (meth)acrylate having a hydroxy group to a polymer having remaining isocyanate group that is synthesized from a polyhydric alcohol and an excess of a multi-isocyanate.

Examples of the polyhydric alcohol include ethylene glycol, 1,2-propanediol, 1,3-propanediol, neopentyl glycol, a hydrogenated bisphenol A, and a hydrogenated bisphenol F.

Examples of the multi-isocyanate include trimethylene diisocyanate, tetramethylene diisocyanate, pentamethylene diisocyanate, hexamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, lysine diisocyanate, diphenylmethane diisocyanate, and isophorone diisocyanate, with hexamethylene diisocyanate being preferable because of its excellent curability.

The urethane (meth)acrylate resin is preferably one obtained by reacting hexamethylene diisocyanate as the multi-isocyanate and pentaerythritol tri(meth)acrylate as the (meth)acrylate having a hydroxy group.

### Other components

The composition may further contain a component other than the compound (A), the polyfunctional compound (B), the polymerization initiator, and other resins. Examples thereof include a diluent, a pigment, a dye, a filler, an ultraviolet absorber, a viscosity improver, a shrinkage reducing agent, an aging inhibitor, a plasticizer, an aggregate, a flame retardant, a stabilizer, a fiber reinforcement, an antioxidant, a leveling agent, and an anti-sagging agent.

Examples of the diluent include styrene and a (meth)acrylic acid ester, and from the viewpoint of the curability, a (meth)acrylic acid ester is preferable. Examples of the pigment include titanium oxide, red iron oxide, aniline black, carbon black, cyanine blue, and chrome yellow. Examples of the filler include talc, mica, kaolin, calcium carbonate, and clay.

### Method for producing composition

The method for producing the composition is not particularly limited, and the composition can be produced by mixing the compound (A), the polyfunctional compound (B), and, if necessary, a polymerization initiator, another resin, and other components.

### Curing method

The method for curing the composition is not particularly limited, and may be appropriately selected depending on the type of the polyfunctional compound (B) and the polymerization initiator to be used. When the composition comprises a photoradical polymerization initiator, the composition is cured, for example, by the irradiation with active energy ray, such as UV. When the composition comprises a thermal radical polymerization initiator, the composition is cured, for example, by heating. When the composition comprises both types of polymerization initiator, heating may be performed after irradiation with active energy ray. A method of curing the composition by irradiation with active energy ray is, although depending on its use, preferable because the effect of the present invention is more remarkably exhibited.

### Use of composition

The use of the composition is not particularly limited. Because the composition has an excellent curability that allows the composition to sufficiently polymerize for curing even in the presence of oxygen in an air atmosphere, the composition is preferably used as a curable composition, such as a coating material (a UV coating material, a UV ink), an adhesive, and a coating agent. By using the composition, a cured product, such as a coating film, an adhesive layer, and a coating layer each being excellent in physical properties, is obtained.

### Examples

Hereinafter, the present invention will be described in detail with reference to examples, but the present invention is not limited to these examples.

### Production Example 1: Synthesis of 3-methyl-1-methacryloyloxy-3-butene

In a reactor equipped with a stirrer, a thermometer, and a dropping funnel, 1601 g (18.6 mol) of 3-methyl-3-buten-1-ol (manufactured by Kuraray Co., Ltd.), 1.6 g (0.019 mol) of phenothiazine (manufactured by FUJIFILM Wako Pure Chemical Corporation), 1873 g (18.7 mol) of methyl methacrylate (manufactured by Kuraray Co., Ltd.), and 21.0 g (0.36 mol) of potassium hydroxide (manufactured by Nippon Soda Co., Ltd.) were charged under a nitrogen gas stream. The internal temperature was raised to 90 °C with stirring, and methyl methacrylate and the generated methanol were distilled off. After the distillation, 21.0 g (0.36 mol) of potassium hydroxide was again charged, and methyl methacrylate and the generated methanol were distilled off. The reaction mixture was washed with 1500 g of ion-exchanged water, and the obtained organic layer was purified by distillation to obtain 1000 g of 3-methyl-1-methacryloyloxy-3-butene (6.5 mol; yield 35%) represented by formula (A-1). The results of ¹H-NMR measurement are shown below. 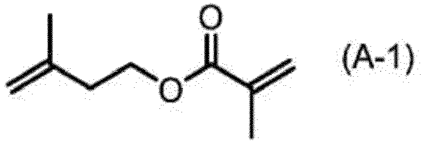 ¹H-NMR (400MHz, CDCl₃, TMS) δ: 6.09 (dd, J = 1.6, 0.8 Hz, 1H), 5.53 (dd, J = 4.0, 1.6 Hz, 1H), 4.81 (s, 1H), 4.76 (s, 1H), 4.26 (t, J = 6.8 Hz, 2H), 2.38 (t, J = 6.8 Hz, 2H), 1.93 (dd, J = 1.6, 1.2 Hz, 3H), 1.77 (s, 3H)

### Production Example 2: Synthesis of 3-methyl-1-acryloyloxy-3-butene

In a reactor equipped with a stirrer, a thermometer, and a dropping funnel, 4780 g of acetonitrile (manufactured by FUJIFILM Wako Pure Chemical Corporation), 962 g (11.2 mol) of 3-methyl-3-buten-1-ol (manufactured by Kuraray Co., Ltd.), 1469 g (14.5 mol) of triethylamine (manufactured by FUJIFILM Wako Pure Chemical Corporation), and 137 g (1.1 mol) of N,N-dimethylaminopyridine (manufactured by FUJIFILM Wako Pure Chemical Corporation) were charged under a nitrogen gas stream. While maintaining the internal temperature at 15 °C or lower, 1220 g (13.4 mol) of acrylic acid chloride (manufactured by Tokyo Chemical Industry Co., Ltd.) was added dropwise with stirring, and the temperature was raised to 25 °C after the dropwise addition. The mixture was stirred at an internal temperature of 25 °C for 12 h. After adding 1440 g of ion-exchanged water to the reaction solution, the mixture was stirred at 12 °C for one hour. After confirming the decomposition of the by-produced acrylic anhydride, the mixture was extracted with ethyl acetate. The organic layer was successively washed with a 2% by mass hydrochloric acid, a 5% by mass aqueous solution of sodium hydrogen carbonate solution, and a saturated brine. The obtained organic layer was purified by distillation to obtain 902 g (6.4 mol; yield 57%) of 3-methyl-1-acryloyloxy-3-butene represented by formula (A-2). The results of ¹H-NMR measurement are shown below. 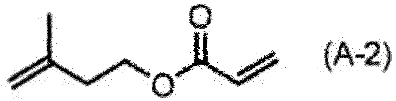 ¹H-NMR (400MHz, CDCl₃, TMS) δ: 6.39 (dd, J = 17.2, 1.6 Hz, 1H), 6.11 (dd, J = 17.2, 10.4 Hz, 1H), 5.80 (dd, J = 10.4, 1.6 Hz, 1H), 4.81 (dd, J = 1.6, 0.8 Hz, 1H), 4.75 (dd, J = 1.6, 0.8 Hz, 1H), 4.27 (t, J = 6.8 Hz, 2H), 2.38 (t, J = 6.8 Hz, 2H), 1.77 (s, 3H)

### Example 1

A curable composition was obtained by mixing 100 parts by mass of 1,9-nonanediol diacrylate (manufactured by Osaka Organic Chemical Industry Ltd.) and 3 parts by mass of Irgacure 184 (manufactured by BASF) as a photopolymerization initiator, and further mixing 1 part by mass of 3-methyl-1-methacryloyloxy-3-butene represented by formula (A-1) produced in Production Example 1 as the compound (A).

Using the curable composition, the thickness of the uncured portion after curing was determined by the following method. The results are shown in Table 1. The smaller the thickness of the uncured portion, the more excellent the curability, because the polymerization inhibition by oxygen was effectively prevented and the polymerization for curing proceeded sufficiently even in the presence of oxygen.

### Measurement of thickness of uncured portion after curing

A PET film (polyethylene terephthalate film; thickness: 300 pm) having a hole with diameter of 4 cm was attached onto a PET film having no hole to prepare a cell. The curable composition obtained above was put into the cell and UV-cured in an air atmosphere under irradiation conditions of an illuminance of 78 mW/cm² and an integrated light quantity of 99 mJ/cm². Thereafter, the surface of the cured product was wiped with a cotton impregnated with acetone to remove the uncured product. The weight change before and after wiping was measured, and the thickness of the uncured portion was calculated from the measured value and the specific gravity of the curable composition. The results are shown in Table 1. The smaller the thickness of the uncured portion, the better the curability.

### Example 2

A curable composition was prepared in the same manner as in Example 1 except for using 3-methyl-1-acryloyloxy-3-butene represented by formula (A-2) produced in Production Example 2 as the compound (A) in place of 3-methyl-1-methacryloyloxy-3-butene represented by formula (A-1). The thickness of the uncured portion after curing was determined in the same manner as in Example 1. The results are shown in Table 1.

### Example 3

A curable composition was prepared in the same manner as in Example 1 except for using 90 parts by mass of dipentaerythritol hexaacrylate (NK-EsterA-DPH, manufactured by Shin-Nakamura Chemical Co., Ltd.) in place of 100 parts by mass of 1,9-nonanediol diacrylate (manufactured by Osaka Organic Chemical Industry Ltd.) and changing the amount of 3-methyl-1-methacryloyloxy-3-butene represented by formula (A-1) from 1 part by mass to 10 parts by mass. The thickness of the uncured portion after curing was determined in the same manner as in Example 1. The results are shown in Table 1.

### Example 4

A curable composition was prepared in the same manner as in Example 1 except for using 90 parts by mass of dipentaerythritol hexaacrylate (NK-EsterA-DPH, manufactured by Shin-Nakamura Chemical Co., Ltd.) in place of 100 parts by mass of 1,9-nonanediol diacrylate (manufactured by Osaka Organic Chemical Industry Ltd.) and using 10 parts by mass of 3-methyl-1-acryloyloxy-3-butene represented by formula (A-2) produced in Production Example 2 in place of 1 part by mass of 3-methyl-1-methacryloyloxy-3-butene represented by formula (A-1). The thickness of the uncured portion after curing was determined in the same manner as in Example 1. The results are shown in Table 1.

### Example 5

A curable composition was prepared in the same manner as in Example 1 except for using 90 parts by mass of a mixture of pentaerythritol triacrylate and pentaerythritol tetraacrylate (NK-EsterA-TMM-3L, manufactured by Shin-Nakamura Chemical Co., Ltd.) in place of 100 parts by mass of 1,9-nonanediol diacrylate (manufactured by Osaka Organic Chemical Industry Ltd.) and changing the amount of 3-methyl-1-methacryloyloxy-3-butene represented by formula (A-1) from 1 part by mass to 10 parts by mass. The thickness of the uncured portion after curing was determined in the same manner as in Example 1. The results are shown in Table 1.

### Example 6

A curable composition was prepared in the same manner as in Example 1 except for using 90 parts by mass of a mixture of pentaerythritol triacrylate and pentaerythritol tetraacrylate (NK-EsterA-TMM-3L, manufactured by Shin-Nakamura Chemical Co., Ltd.) in place of 100 parts by mass of 1,9-nonanediol diacrylate (manufactured by Osaka Organic Chemical Industry Ltd.) and using 10 parts by mass of 3-methyl-1-acryloyloxy-3-butene represented by formula (A-2) produced in Production Example 2 in place of 1 part by mass of 3-methyl-1-methacryloyloxy-3-butene represented by formula (A-1). The thickness of the uncured portion after curing was determined in the same manner as in Example 1. The results are shown in Table 1.

### Comparative Example 1

A curable composition was prepared in the same manner as in Example 1 except for omitting the addition of 3-methyl-1-methacryloyloxy-3-butene represented by formula (A-1). The thickness of the uncured portion after curing was determined in the same manner as in Example 1. The results are shown in Table 1.

### Comparative Example 2

A curable composition was prepared in the same manner as in Example 1 except for using 3-methyl-3-butene-1-ol (manufactured by Kuraray Co., Ltd.) as the unsaturated double bond-comprising compound in place of 3-methyl-1-methacryloyloxy-3-butene represented by formula (A-1). The thickness of the uncured portion after curing was determined in the same manner as in Example 1. The results are shown in Table 1.

### Comparative Example 3

A curable composition was prepared in the same manner as in Example 1 except for using methyl methacrylate (manufactured by Kuraray Co., Ltd.) as the unsaturated double bond-comprising compound in place of 3-methyl-1-methacryloyloxy-3-butene represented by formula (A-1). The thickness of the uncured portion after curing was determined in the same manner as in Example 1. The results are shown in Table 1.

### Comparative Example 4

A curable composition was prepared in the same manner as in Example 1 except for using methyl acrylate (manufactured by FUJIFILM Wako Pure Chemical Corporation) as the unsaturated double bond-comprising compound in place of 3-methyl-1-methacryloyloxy-3-butene represented by formula (A-1). The thickness of the uncured portion after curing was determined in the same manner as in Example 1. The results are shown in Table 1.

**Table 1**

| | Thickness of uncured portion |
|---|---|
| Example 1 | 4.6 µm |
| Example 2 | 3.7 µm |
| Example 3 | 0.0 µm |
| Example 4 | 0.0 µm |
| Example 5 | 0.0 µm |
| Example 6 | 0.0 µm |
| Comparative Example 1 | 6.2 µm |
| Comparative Example 2 | 6.5 µm |
| Comparative Example 3 | 5.8 µm |
| Comparative Example 4 | 7.1 µm |

As shown in Table 1, in Examples 1 to 6, the thickness of the uncured portion after curing is smaller than that in Comparative Examples 1 to 4, showing that the compositions of Examples 1 to 6 have an excellent curability because the compositions are highly effective on preventing polymerization inhibition by oxygen and sufficiently polymerize for curing even in the presence of oxygen. Therefore, when the composition is actually used as a curable composition, such as a coating material, under the condition in the presence of oxygen, such as in an air atmosphere, it is expected to effectively prevent the decrease in curing rate and the occurrence of surface stickiness.

## Claims

1. A composition comprising a compound (A) represented by formula (I) and a polyfunctional compound (B) other than the compound (A): 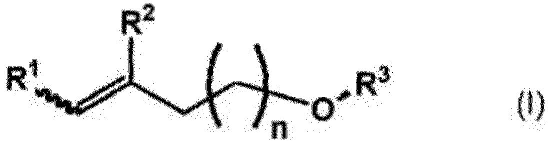 wherein:
R¹ and R² each independently represent any one selected from the group consisting of a hydrogen atom, an alkyl group having 1 to 6 carbon atoms, an alkenyl group having 2 to 6 carbon atoms, an aryl group, and an aralkyl group;
R³ represents any one selected from the group consisting of a (meth)acryloyl group, a 4-vinylphenyl group, and an alkenyl group having 2 to 6 carbon atoms;
n represents an integer of 0 to 5; and
a wavy line between R¹ and the double bond to which R¹ is attached indicates that R¹ is in a cis-position or a trans-position with respect to R².

2. The composition according to claim 1, wherein R¹ and R² each independently represent any one selected from the group consisting of a hydrogen atom, an alkyl group having 1 to 6 carbon atoms, and an alkenyl group having 2 to 6 carbon atoms.

3. The composition according to claim 1 or 2, wherein R¹ and R² each independently represent a hydrogen atom or an alkyl group having 1 to 6 carbon atoms.

4. The composition according to any one of claims 1 to 3, wherein R¹ and R² each independently represent a hydrogen atom or an alkyl group having 1 to 4 carbon atoms.

5. The composition according to any one of claims 1 to 4, wherein R¹ and R² each independently represent a hydrogen atom or a methyl group.

6. The composition according to any one of claims 1 to 5, wherein R¹ is a hydrogen atom and R² is a hydrogen atom or a methyl group.

7. The composition according to any one of claims 1 to 6, wherein R³ is a (meth)acryloyl group or a 4-vinylphenyl group.

8. The composition according to any one of claims 1 to 7, wherein R³ is a (meth)acryloyl group.

9. The composition according to any one of claims 1 to 8, wherein the compound (A) is represented by formula (II): 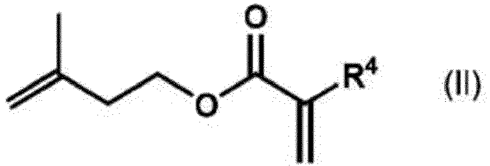 wherein R⁴ represents a hydrogen atom or a methyl group.

10. The composition according to any one of claims 1 to 9, wherein the polyfunctional compound (B) is a multi-(meth)acrylate, an epoxy group-comprising (meth)acryloyl compound, or a hydroxy group-comprising multi-(meth)acrylate.

11. The composition according to any one of claims 1 to 10, wherein the polyfunctional compound (B) is a multi-(meth)acrylate.

12. The composition according to any one of claims 1 to 11, wherein the polyfunctional compound (B) is 1,6-hexamethylene di(meth)acrylate, 1,9-nonanediol di(meth)acrylate, or pentaerythritol tri(meth)acrylate.

13. The composition according to any one of claims 1 to 12, wherein the composition comprises a polymerization initiator.

14. A cured product obtained by curing the composition according to any one of claims 1 to 13.

## Amended claims

### Amended claims under Art. 19.1 PCT

1. (Currently amended) A composition comprising a compound (A) represented by formula (II): 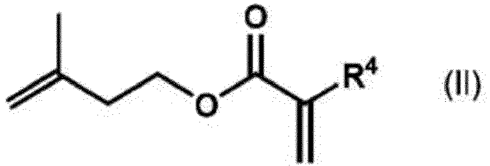
wherein R⁴ represents a hydrogen atom or a methyl group, and
a polyfunctional compound (B) other than the compound (A),
wherein the polyfunctional compound (B) is a multi-(meth)acrylate having two or more (meth)acryloyloxy groups in the molecule or a hydroxy group-comprising multi-(meth)acrylate having two or more (meth)acryloyloxy groups in the molecule.

2. (canceled)

3. (canceled)

4. (canceled)

5. (canceled)

6. (canceled)

7. (canceled)

8. (canceled)

9. (canceled)

10. (Currently amended) The composition according to claim 1, wherein the polyfunctional compound (B) is at least one selected from the group consisting of ethylene glycol di(meth)acrylate, diethylene glycol di(meth)acrylate, dipropylene glycol di(meth)acrylate, tripropylene glycol di(meth)acrylate, 1,3-butanediol di(meth)acrylate, 1,4-butanediol di(meth)acrylate, 1,6-hexamethylene di(meth)acrylate, neopentyl glycol di(meth)acrylate, 1,9-nonanediol di(meth)acrylate, 1,10-decanediol di(meth)acrylate, tricyclodecanedimethanol di(meth)acrylate, glycerin di(meth)acrylate, a di(meth)acrylate of a hydrogenated bisphenol A or a hydrogenated bisphenol F, polyethylene glycol di(meth)acrylate, polypropylene glycol di(meth)acrylate, pentaerythritol tetra(meth)acrylate, dipentaerythritol hexa(meth)acrylate, and trimethylolpropane tri(meth)acrylate.

11. (Currently amended): The composition according to claim 1 or 10, wherein the polyfunctional compound (B) is at least one selected from the group consisting of glycerol di(meth)acrylate, trimethylolpropane di(meth)acrylate, pentaerythritol tri(meth)acrylate, pentaerythritol di(meth)acrylate, and dipentaerythritol monohydroxypenta(meth)acrylate.

12. (Currently amended): The composition according to claim 1, wherein the polyfunctional compound (B) is at least one selected from the group consisting of 1,6-hexamethylene di(meth)acrylate, 1,9-nonanediol di(meth)acrylate, pentaerythritol tri(meth)acrylate, pentaerythritol tetra(meth)acrylate, and dipentaerythritol hexaacrylate.

13. (canceled)

14. (canceled)

15. (New) The composition according to any one of claims 1 and 10 to 12, wherein in the compound (A), R⁴ of formula (II) is a hydrogen atom.

16. (New) The composition according to any one of claims 1 and 10 to 12, wherein in the compound (A), R⁴ of formula (II) is a methyl group.

17. (New) The composition according to any one of claims 1, 10 to 12, 15, and 16, the composition comprises a polymerization initiator.

18. (New) A cured product obtained by curing the composition according to any one of claims 1, 10 to 12, and 15 to 17.
